# EUROPÄISCHE PATENTSCHRIFT

(11) **EP 3 749 613 B1**
(45) Veröffentlichungstag und Bekanntmachung des Hinweises auf die Patenterteilung: **16.11.2022**
(21) Anmeldenummer: 19704572.7
(22) Anmeldetag: 05.02.2019
(51) Int. Cl.: C02F 1/00, C02F 1/42, C02F 5/08, B01J 39/05, B01J 41/07

(54) **VERFAHREN ZUR HERSTELLUNG EINES ANIONENAUSTAUSCHERS ZUR DOSIERUNG VON POLYPHOSPHAT IN WASSER**
METHOD FOR PRODUCING AN ANION EXCHANGER FOR DOSING POLYPHOSPHATE INTO WATER
PROCÉDÉ DE FABRICATION D'UN ÉCHANGEUR D'ANIONS POUR DOSAGE DE POLYPHOSPHATE DANS L'EAU

(30) Priorität: 09.02.2018 DE 102018103004
(43) Veröffentlichungstag der Anmeldung: 16.12.2020
(73) Patentinhaber: Aquis Wasser-Luft-Systeme GmbH Lindau, Zweigniederlassung Rebstein, 9445 Rebstein (CH)
(72) Erfinder: HEITELE, Bernd, 9437 Marbach (CH)
(74) Vertreter: Otten, Roth, Dobler & Partner mbB Patentanwälte
(86) Internationale Anmeldenummer: PCT/EP2019/052686
(87) Internationale Veröffentlichungsnummer: WO 2019/154768

(56) Entgegenhaltungen:
- EP-A1- 0 417 282
- EP-A1- 2 684 849
- WO-A1-2012/119710
- US-A- 4 734 200

## Beschreibung

Dosiermittels zur Dosierung von Polyphosphat und optional Phosphat in Wasser, nach Anspruch 1.

Wasser wird i. d. Regel vor seiner Verwendung zum Schutz von Gesundheit, Leitungen, Speichermitteln, Geräten und dgl. mehr mittels im Handel erhältlichen Wasserfilterpatronen aufbereitet. Ein wesentlicher Aspekt ist dabei die Bekämpfung und/oder Vermeidung von Kalkausfällungen.

Hierzu können zum einen die Härtebildner vom Wasser abgetrennt werden. Z.B. mittels Kationentauscher. Dabei werden beispielsweise Calcium- und Magnesiumionen gegen Natriumionen getauscht.

Zum anderen kann die Kristallbildung gehemmt, d.h. die Härte stabilisiert werden, z.B. durch Zugabe von Inhibitoren, beispielsweise Polyphosphaten. Üblicherweise werden diese dem Rohwasser zudosiert, um sie mit einer Carbonatgruppe auszutauschen und dadurch die Keimbildung von Kalk zu stören.

Dazu gibt es einerseits die Möglichkeit der Flüssigdosierung mit leicht löslichen Polyphosphaten oder einer löslichkeitsgesteuerten Dosierung über den Kontakt mit schwerlöslichen Polyphosphaten.

Bei leicht löslichen Polyphosphaten handelt es sich überwiegend um Natriumsalze der Polyphosphate, entsprechend bei den schwerlöslichen um Calcium oder Magnesiumsalze der Polyphosphate.

Bei der Dosierung in einen Wassertank, beispielsweise in einen Wassertank eines Haushaltsgerätes, besteht bisher das Problem, dass das schwerlösliche Salz für den Verkalkungsschutz, insbesondere des Wassertanks selbst, also seiner mit dem in ihm zu bevorratenden Wasser in Berührung kommenden Flächen, nicht ausreichend Polyphosphat abgibt. Im Laufe der Zeit bilden sich daher auch an diesen Flächen unerwünschte und unansehnliche Ablagerungen aus.

Weiterhin kann das schwerlösliche Polyphosphat nicht gemeinsam mit einem schwach sauren Ionenaustauscher gelagert werden, wie er beispielsweise in einer Filterpatrone als Filterbett angeordnet ist. Z.B. einer Filterpatrone für einen Wassertank eines Haushaltsgerätes, da der schwach saure Ionenaustauscher der Filterpatrone eine Umgebungsfeuchte von über 80% relativer Luftfeuchtigkeit in einer luftdichten Folienverpackung erzeugt. Eine luftdichte Verpackung ist wiederum gegen Austrocken des Ionentauschers erforderlich.

Schwerlösliches Polyphosphat kann jedoch nicht bei einer relativen Luftfeuchte grösser 50% stabil gelagert werden. Die Folge einer gemeinsamen Verpackung von schwerlöslichem Polyphosphat und feuchtem Ionenaustauscher sind damit Ausblühungen und freies Wasser an der Oberfläche des Polyphosphats, welches innerhalb der Folienverpackung verteilt wird und dann weiße Flecken auf dem Produkt hinterlässt.

Die Verwendung des flüssigen Polyphosphats ist ebenfalls schwierig, da der Dosierprozess im Anwendungsfall einerseits über drei Monate hinweg anhalten muss, und andererseits keine Überdosierung erfolgen darf. Zwar kann die Abgabe über eine geringe Kontaktfläche und Diffusion in einem gewissen Maße eingestellt werden, das Problem der Lagerung (Ausrinnen bzw. Eintrocknen) und auch der Überdosierung bei langem Kontakt ist damit jedoch kaum zu lösen.

Bei der Dosierung von Polyphosphaten innerhalb von leitungsgebundenen Wasseraufbereitungsvorrichtungen, insbesondere Entkarbonisierungsfiltern, ist ebenfalls die ausreichende Dosierung, Lagerung in einem geschlossenen Behälter bei hoher rel. Luftfeuchte und die Vermeidung von Überdosierung technisch nur schwer zu lösen.

Relevante Dokumente sind z.B. WO 2012/119710 A1, US 4 734 200 A, EP 0 417 282 A1.

Der Erfindung liegt daher die **Aufgabe** zugrunde, einerseits die Lagerstabilität für Poylphosphat enthaltendes Verkalkungsschutzmittel und andererseits die Zudosierung des Poylphosphats aus einem solchen Verkalkungsschutzmittel in Wasser zu verbessern.

Die Lösung dieser Aufgabe erfolgt durch die Merkmale des Anspruchs 1.

Nachfolgend wird ein festes Dosiermittel zur Dosierung von Phosphat und/oder Polyphosphat in Wasser beschrieben. Dieses zeichnet sich dadurch aus, dass ein wasserunlöslicher Anionenaustauscher vorgesehen ist, der zumindest teilweise mit Polyphosphat und optional Orthophosphat-Gegenionen beladen ist. Durch die Verwendung eines Anionenaustauschers mit Polyphosphat-Gegenionen zur Dosierung von Polyphosphat in Wasser kann durch die ionische Bindung von Polyphosphationen an einen Anionenaustauscher einerseits eine dauerhaft stabile Lagerfähigkeit für das Polyphosphat erzielt werden.

Andererseits kann aufgrund dieser Bindung des Polyphosphats an einen Anionenaustauscher die Polyphosphatabgabe durch Ionenaustauschgleichgewichtsreaktionen nach oben hin begrenzt werden. Unterhalb des Gleichgewichts, insbesondere mit Rohwasser, ist jedoch die Abgaberate hoch, so dass ausreichend Polyphosphat über einen langen Zeitraum abgegeben werden kann.

In einer bevorzugten Ausführungsform ist ein basischer Anionenaustauscher vorgesehen, insbesondere ein schwach basischer Anionenaustauscher.

Gemäß einer weiter bevorzugten Ausführungsform ist ein Anionenaustauscher auf Polystyrolbasis vorgesehen.

Alternativ oder zusätzlich kann ein Anionenaustauscher auf Polyacrylatbasis vorgesehen sein.

Die Erfindung betrifft ein Verfahren zur Herstellung eines festen Dosiermittels zur Dosierung von Polyphosphat und optional Phosphat in Wasser. Dieses zeichnet sich dadurch aus, dass als Ausgangsstoff zur Beladung des wasserunlöslichen Anionenaustauschers eine flüssige Polyphosphatlösung verwendet wird, insbesondere eine Natriumpolyphosphatlösung.

Zur Beladung des Anionenaustauschers mit Polyphosphationen wird zunächst die Polyphosphatlösung insbesondere die Natriumpolyphosphatlösung, über einen sauren Kationenaustauscher, bevorzugt einen stark sauren Kationenaustauscher, filtriert und im Anschluss über den Anionenaustauscher in OH- bzw. freier Baseform geleitet.

Im Weiteren wird auch die Verwendung eines festen Dosiermittels zur Dosierung von Phosphat und/oder Polyphosphat in Wasser beschrieben. Dieses zeichnet sich dadurch aus, dass es zur Stabilisierung von Wasserhärte verwendet wird.

Vorzugsweise wird der Anionenaustauscher mit Polyphosphat-Gegenionen in einer Filtervorrichtung verwendet, insbesondere in einer Wasserfiltervorrichtung.

Gemäß einer bevorzugten Verwendung kann die Wasserfiltervorrichtung in einem Wassertank eingesetzt werden, insbesondere einem Wassertank einer Heißgetränkemaschine und/oder einer Haushaltsmaschine.

Insbesondere kann die Wasserfiltervorrichtung zur Verhinderung von Ablagerungen an den mit dem Wasser in Kontakt kommenden Flächen des Wassertanks verwendet werden.

Die Wasserfiltervorrichtung kann aber auch als leitungsgebundene Wasserfiltervorrichtung verwendet werden.

Bei der Stabilisierung von Wasserhärte durch die Verwendung eines Anionenaustauschers mit Polyphosphat-Gegenionen zur Dosierung von Polyphosphat in Wasser kann durch die ionische Bindung von Polyphosphationen an einen Anionenaustauscher einerseits eine dauerhaft stabile Lagerfähigkeit für das Polyphosphat erzielt werden.

Andererseits kann aufgrund dieser Bindung des Polyphosphats an einen Anionenaustauscher die Polyphosphatabgabe durch Ionenaustauschgleichgewichtsreaktionen nach oben hin begrenzt werden. Unterhalb des Gleichgewichts, insbesondere mit Rohwasser, ist jedoch die Abgaberate hoch, so dass ausreichend Polyphosphat über einen langen Zeitraum abgegeben werden kann.

Durch Austausch von z.B. im Rohwasser vorhandenen Carbonationen mit den am Anionenaustauscher angelagerten, insbesondere ionisch gebundenen Polyphosphationen kann die Kristallbildung von Calciumcarbonat bzw. Kalk im Wasser unterbunden, zumindest gestört werden. Dadurch fällt die enthaltene Härte nicht aus und bildet keine Ablagerungen an den mit dem Wasser in Kontakt kommenden Flächen.

Bevorzugt kann ein basischer Anionenaustauscher verwendet werden, insbesondere ein schwach basischer Anionenaustauscher. Schwach basische Ionentauscher haben den Vorteil, dass sie, im Vergleich zu stark basischen Ionentauschern, eine wesentlich höhere Kapazität aufweisen. Damit können wesentlich mehr Polyphosphationen auf den Anionenaustauscher aufgebracht werden, bzw. ist für die Beladung mit der selben Menge an Polyphosphationen ein wesentlich geringerer Anteil an Anionenaustauscher erforderlich als beispielsweise bei einem stark basischem Anionentauscher.

In einer besonderen Ausführung der Erfindung wird ein schwach basischer Anionenaustauscher auf Polyacrylatbasis verwendet. Gegenüber auch geeigneten Anionentauschern auf Polystyrolbasis weisen Polyacrylattauscher eine günstigere Nitrosaminabgabe auf.

Gemäß einer Verwendung kann der Anionenaustauscher mit Polyphosphat Gegenionen in einer Filtervorrichtung verwendet werden, insbesondere in einer Wasserfiltervorrichtung.

Bevorzugt kann die Wasserfiltervorrichtung in einem Wassertank eingesetzt werden, insbesondere einem Wassertank einer Heißgetränkemaschine und/oder einer Haushaltsmaschine.

Dabei kann die Wasserfiltervorrichtung z.B. zur Verhinderung von Ablagerungen an den mit dem Wasser in Kontakt kommenden Flächen des Wassertanks verwendet werden.

Die Wasserfiltervorrichtung jedoch auch als leitungsgebundene Wasserfiltervorrichtung verwendet werden.

Auch bei solchen Anwendungen liefert die hier beschriebene Erfindung ein Material, welches lagerstabil ist und eine gleichmässige Dosierung von Polyphosphat erlaubt.

Bei einem Verfahren zur Herstellung eines Anionenaustauschers mit Polyphosphat Gegenionen kann als Ausgangsstoff für das eingesetzte Polyphosphatanion eine flüssige Polyphosphatlösung verwendet werden, insbesondere eine Natriumpolyphosphatlösung. Natriumpolyphosphatlösungen sind in hohen Konzentrationen bis ca. 30% Gew. flüssig und so leicht zu dosieren und platzsparend zu lagern.

Gemäß einem bevorzugten Herstellungsverfahren wird zur Beladung des Anionenaustauschers mit Polyphosphationen zunächst die Polyphosphatlösung insbesondere die Natriumpolyphosphatlösung verwendet Die Lösung wird dann über einen sauren Kationenaustauscher, bevorzugt stark sauren Kationenaustauscher, filtriert und im Anschluss über den Anionenaustauscher in OH- bzw. freier Baseform geleitet

Um die Polyphosphatlösung mit hoher Ausbeute auf den Anionentauscher zu überführen, ist es vorteilhaft, diese auf eine Konzentration von 0,5 bis 5 Gew.% vor der Verwendung mit Wasser zu verdünnen.

Zusammenfassend kann festgehalten werden, bei dem Verfahren zur Stabilisierung von Härte wird ein Anionenaustauscher mit Polyphosphat Gegenionen zur Dosierung des Polyphosphats in Wasser eingesetzt.

Zur Herstellung wird das zunächst flüssige Polyphosphat an einen bevorzugt schwach basischen Anionenaustauscher ionisch gebunden Denn schwach basische Anionentauscher haben eine wesentlich höhere Ladekapazität als vergleichsweise stark basische. Damit kann die selbe Ladekapazität mit einer vergleichsweise deutlich geringerer Menge Anionentauscher bereitgestellt werden, als mit einem stark basischen Anionentauscher. Entsprechend reduziert sich auch der hierfür erforderliche Platzbedarf bzw. das erforderliche Volumen.

Der so behandelte Austauscher kann sowohl trocken als auch nass nahezu unbegrenzt gelagert werden. Auch ist die Polyphosphatabgabe im Kontakt mit Wasser durch Ionenaustauschgleichgewichtsreaktionen mit den Wasserinhaltsstoffen nach oben hin begrenzt. Unterhalb des Gleichgewichts mit dem Rohwasser ist jedoch die Abgaberate hoch, so dass ausreichend Polyphosphat über einen langen Zeitraum abgegeben werden kann.

Als Anionenaustauscher wird bevorzugt ein schwach basischer Anionenaustauscher auf Polystyrolbasis eingesetzt.

Alternativ kann auch ein bevorzugt schwach basischer Anionenaustuscher auf Polyacrylatbasis eingesetzt werden.

Als Ausgangsstoff für das eingesetzte Polyphosphatanion ist eine flüssige Polyphosphatlösung vorgesehen, insbesondere eine flüssige Natriumpolyphosphatlösung.

Zur Beladung des Anionenaustauschers mit Polyphosphationen wird zunächst die Polyphosphatlösung, insbesondere die Natriumpolyphosphatlösung über einen bevorzugt stark sauren Kationenaustauscher in H⁺ Form filtriert und im Anschluss über den Anionenaustauscher in OH- bzw. freier Baseform geleitet.

Ausführungsbeispiel:
Die vorliegende Erfindung wird nachfolgend anhand der beigefügten Figuren und der darauf bezugnehmenden Beschreibung näher erläutert.

Es zeigen:
- Fig. 1: die Formeln zur Herstellung eines mit Polyphosphat beladenen Anionentauschers zur Dosierung von Polyphosphat in Wasser.
- Fig. 2: beispielhaft und schematisch, die Schritte des Herstellungsverfahrens für einen mit Polyphosphat beladenen Anionentauscher zur Dosierung von Polyphosphat in Wasser und die dabei verwendeten und entstehenden Produkte und Zwischenprodukte.
- Fig. 3: die Formeln zur Verwendung eines mit Polyphosphat beladenen Anionentauschers zur Dosierung von Polyphosphat in Wasser.
- Fig. 4: beispielhaft und schematisch, eine Wasserfilterpatrone umfassend ein Mittel zur Vermeidung von Kalkausfällungen in Wasser, in Längsquerschnitt dargestellt, beim Einsatz in einen ebenfalls in Längsquerschnitt dargestellten Wassertank.
- Fig. 5: beispielhaft und schematisch eine zur Fig. 4 alternativen Ausführungsform einer Wasserfilterpatrone mit einem Depot für ein Mittel gegen Kalkausfällungen in Frontalansicht.
- Fig. 6: beispielhaft und schematisch eine Schnittdarstellung zur Ausführungsform gemäß Fig. 5.
- Fig. 7: beispielhaft und schematisch, eine leitungsgebundene Wasserfilterkartusche umfassend ein Mittel zur Vermeidung von Kalkausfällungen in Wasser in Längsquerschnitt dargestellt.

### Konstruktive Ausführung:

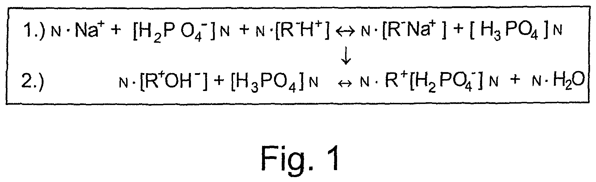

**Figur 1** zeigt die Formeln "1.)" und "2.)" zur **Herstellung** eines mit Polyphosphat beladenen Anionentauschers zur Dosierung von Polyphosphat in Wasser. Diese lautet:
- Na⁺ :: Natriumion
- [H₂PO₄⁻]_{N}:: Polyphosphation mit Kettenlänge _{N} und _{N} negativen Ladungen
- [H₃PO₄]_{N}:: Polyphosphorsäure
- R⁻ :: stark saurer Kationentauscher
- R⁺ :: zumindest schwach basischer Anionentauscher
- H⁺ :: Wasserstoffion
- OH⁻ :: Hydroxidion

1. Schritt: Entfernung Natrium

   _{N} · Na⁺ + [H₂PO₄⁻]_{N} + _{N} · [R⁻H⁺] ↔ _{N} · [R⁻Na⁺] + [H₃PO₄]_{N}
2. Schritt: Bindung Polyphosphat auf Anionentauscher

   _{N} · [R⁺OH⁻] + [H₃PO₄]_{N} ↔ _{N} · R⁺[H₂PO₄⁻]_{N} + _{N} · H₂O

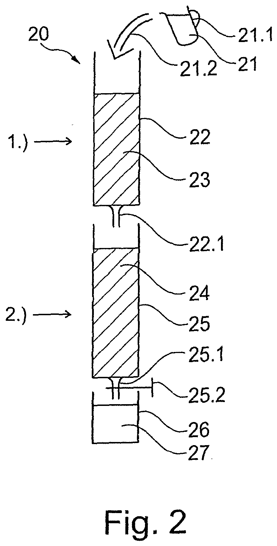

**Figur 2** zeigt einen Aufbau 20 zur Herstellung eines mit Polyphosphat 21 beladenen Anionentauschers zur Dosierung von Polyphosphat in Wasser, gemäß den in der Fig. 1 dargestellten Formeln "1.)" und "2.)".

Dabei wird im Verfahrensschritt "1.)" zur Beladung des Anionenaustauschers mit Polyphosphationen zunächst die Natriumpolyphosphatlösung 21 über einen bevorzugt stark sauren Kationenaustauscher 23 filtriert und im Anschluss, gem. Verfahrensschritt "2.)", über den Anionenaustauscher 24 geleitet. Dieser kann z.B. in zumindest schwach basischer OH- bzw. freier Baseform vorliegen.

Im beispielhaft dargestellten Aufbau 20 wird die Natriumpolyphosphatlösung 21 in einem Behältnis 21.1 vorgehalten und gem. Pfeil 21.2 auf das stark saure Ionentauschergranulat 23 in H⁺-Form in einem Behältnis 22 geleitet, um das Polyphosphat vom Natrium zu trennen, und anschließend über den Auslass 22.1 dem Trägermaterial i.d.F. eines Anionentauschergranulats 24 im Behältnis 25 zugeführt, um dieses mit dem Polyphosphat zu beladen.

Übrigbleibendes, entsalztes Wasser 27 wird aus dem mit einem Verschlussmittel 25.2 versehenen Auslass 25.1 in ein Behältnis 26 abgelassen.

Das nun ionisch am Anionentauschergranulat 24 gebundene Polyphosphat ist nahezu unbegrenzt lagerstabil. Und zwar sowohl in trockner als auch in nasser Umgebung.

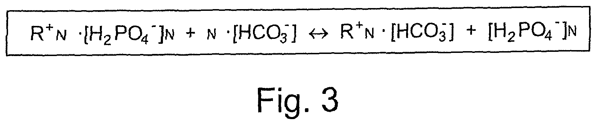

**Figur 3** zeigt die Formel für die **Abgabe** von Polyphosphat aus dem gem. dem Verfahren nach Fig. 2 beladenen Anionentauscher zur Dosierung von Polyphosphat in Wasser.

Diese lautet:
- R⁺_{N}:: schwach basischer Anionentauscher
- [H₂PO₄⁻]_{N}:: Polyphosphat mit Kettenlänge N und N negativen Ladungen
- HCO₃⁻:: Hydrogencarbonat

R⁺_{N} · [H₂PO₄⁻]_{N} + _{N} · [HCO₃⁻] ↔ R⁺_{N} · [HCO₃⁻] + [H₂PO₄⁻]_{N}

Dabei ist die Polyphosphatabgabe im Kontakt mit Wasser durch Ionenaustauschgleichgewichtsreaktionen mit den Wasserinhaltsstoffen nach oben hin begrenzt. Unterhalb des Gleichgewichts mit dem Rohwasser ist demgegenüber die Abgaberate hoch. Dadurch kann über einen langen Zeitraum ausreichend Polyphosphat abgegeben werden.

Bei diesem Verfahren zur Stabilisierung von Härte wird somit ein Anionenaustauscher mit Polyphosphat Gegenionen zur Dosierung des Polyphosphats in Wasser eingesetzt. Bevorzugt ist dies ein schwach basischer Anionenaustauscher auf Polyacrylatbasis. Alternativ kann auch ein schwach basischer Anionenaustauscher auf Polystyrolbasis eingesetzt werden.

Ausgangsstoff für das eingesetzte Polyphosphatanion ist eine flüssige Polyphosphatlösung, insbesondere eine Natriumpolyphosphatlösung. Denkbar sind auch Kaliumpolyphosphatlösungen.

Zur Beladung des Anionenaustauschers mit Polyphosphationen wird zunächst die Natriumpolyphosphatlösung über einen bevorzugt stark sauren Kationenaustauscher filtriert und im Anschluss über den Anionenaustauscher in OH- bzw. freier Baseform geleitet (s. Fig. 2).

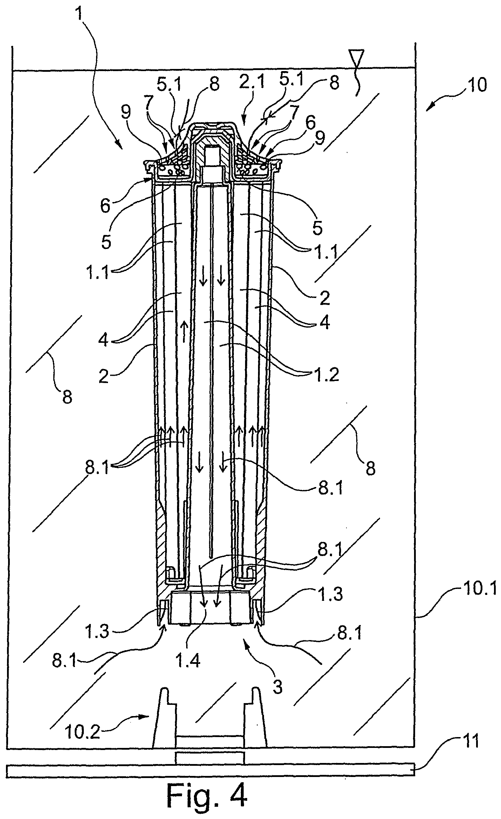

**Figur 4** zeigt eine Wasserfilterpatrone 1, umfassend einen Anionenaustauscher mit Polyphosphat Gegenionen zur Dosierung des Polyphosphats in Wasser, beim Einsatz in einen Wassertank 10, dessen Gehäuse mit 10.1 nummeriert ist. Hierzu wird das filterseitige Tankanschlusselement 3 mit einem tankseitigen Filteranschlusselement 10.2 verbunden. Vorzugsweise mittels einer Steckverbindung.

Die Wasserfilterpatrone 1 umfasst ein Gehäuse 2, eine Einlassöffnung 1.3 und eine Auslassöffnung 1.4 für den Zu- und Ablauf des im Wassertank bevorrateten Wassers 8, in die Filterpatrone 1 hinein und wieder heraus. Dieses Wasser 8 wird dabei zur Aufbereitung für die Verwendung in z.B. einer stromabwärtig angeschlossenen Heißgetränkemaschine 11 über eine Filterstrecke 4 geführt. Eine solche Filterstrecke kann in der Aufstromkammer 1.1 und/oder der Abstromkammer 1.2 ausgebildet sein. Die Pfeile 8.1 symbolisieren die Fließrichtung des Wassers bei dessen Entnahme aus dem Wassertank 10, wenn die Filterpatrone 1 in fertig eingesetztem Zustand im Filterbetrieb arbeitet.

Die Wasserfilterpatrone 1 umfasst zusätzlich zur Filterstrecke 4 und von dieser getrennt ausgebildet, ein Depot 6, vorzugsweise in der Form einer Vorratskammer, für ein Mittel 5 gegen Ausfällungen, insbesondere gegen Kalkausfällungen im Wassertank, wobei Kontaktöffnungen 7 vorgesehen sind, die das Depot 6 mit dem im Wassertank 10 bevorratetem Wasser 8 verbinden.

Das Depot 6 kann im Gehäuse 2 der Wasserfilterpatrone 1 angeordnet sein. Im dargestellten Fall in einem Deckel 2.1 des Gehäuses.

Das Mittel 5 gegen Kalkausfällungen im Wassertank kann einen schwach sauren Kationentauscher umfassen und/oder einen Härtestabilisierer und/oder ein schwer lösliches Polyphosphat, insbesondere auf Calciumbasis.

Das Mittel 5 gegen Kalkausfällungen im Wassertank kann auch ein leicht lösliches Polyphosphat auf Natriumbasis umfassen.

Weiterhin kann das Mittel 5 gegen Kalkausfällungen im Wassertank ein schwach basisches Anionentauschermaterial umfassen, insbesondere ein schwach basisches Anionentauschermaterial mit Polyphosphationen als Gegenionen.

Und das schwach basische Anionentauschermaterial kann als Stabilisierungsmittel für das Polyphosphat vorgesehen sein.

Die Pfeile 8.1 symbolisieren den Zustrom des im Wassertank 10 bevorrateten Wassers 8, zu dem Mittel 5 gegen Kalkausfällungen im Wassertank. Es fließt durch die Kontaktöffnungen 7 in das Depot zum Mittel 5. Ggf. ist auch ein Vlies 9 oder dgl. vorgesehenen, um das Mittel 5 zusätzlich einzuschließen.

Die Pfeile 5.1 symbolisieren im Wassertank 10 bevorratetes Wasser 8, welches mit dem Mittel 5 gegen Kalkausfällungen im Wassertank bereits behandelt ist. Aufgrund der höheren Konzentration der Behandlungsstoffe aus dem Mittel 5 im Wasser 8 in der Nähe des Mittels 5, im Vergleich zu an anderer Stelle des Wassertanks bevorratetem, noch nicht mit dem Mittel 5 in Kontakt gekommenen Wasser wird ein Konzentrationsausgleich angestoßen, der im Laufe der Lagerzeit eine Behandlung auch des übrigen im Wassertank gelagerten Wassers und damit erfindungsgemäß eine Vermeidung von Kalkausfällungen an den mit dem Wasser in Kontakt kommenden Flächen bewirkt. Weiterhin kann auch in dem vom aufzubereitenden Wasser durchströmten Bereich in und/oder um die Wasserfilterpatrone 1 ein Mittel 5 gegen Kalkausfällungen i.d.F. eines Härtestabilisators vorgesehen sein. Z.B. im und/oder um den Einströmbereich des Wassers in die Filterpatrone. Auch hierfür kann ein Depot 6 vorgesehen sein. Z.B. i.d.F. eines durch ein Gewebe zumindest teilweise umschlossenen Raumes. Beispielsweise eines Einlegeteils, wie z.B. ein mit dem Mittel 5 befüllter Ring. Oder i.d.F. einer Schüttung, vorzugsweise zumindest nach außen hin mit einem Rückhaltemittel gegen Austreten gesichert. Z.B. einem Vlies oder dgl. Beispielhaft hierfür ist in der Figur 4 über der Einlassöffnung 1.3 ein mit einem Mittel 5 befülltes Depot 6 dargestellt.

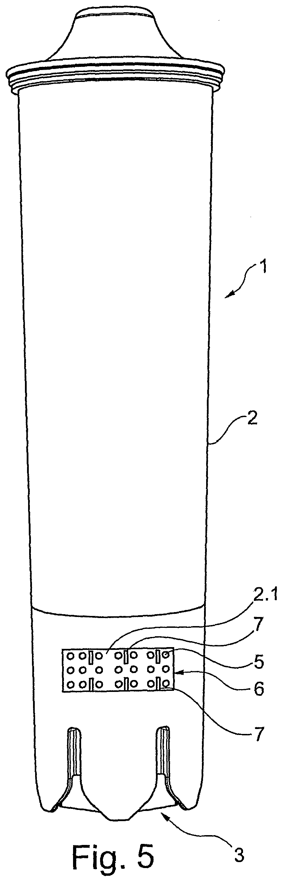

Figur 5 zeigt beispielhaft und schematisch eine zur Fig. 4 alternative Ausführungsform einer Wasserfilterpatrone 1 mit einem Depot 6 für ein Mittel 5 gegen Kalkausfällungen in Frontalansicht. Hierbei kann ein Depot 6 für das Mittel 5 gegen Kalkausfällungen in und/oder an dem Gehäuse 2 angeordnet sein. Zur Visualisierung des vorzugsweise granulatförmigen Mittels 5 sind kleine Kreise dargestellt. Das Granulat 5 kann mittels einem Abdeckmittel, z.B. entsprechend dem Deckel 2.1 in der Ausführung gem. Fig. 4, in dem Depot 6 gehalten sein. Auch hier können Kontaktöffnungen 7 einen Zugang für Wasser zum Mittel 5 ermöglichen. Die rechteckige Darstellung der Kontaktöffnungen 7 ist rein beispielhaft zur besseren Unterscheidung in dieser Visualisierung. Sie können durchaus auch andere Konturen und/oder Querschnitte aufweisen.

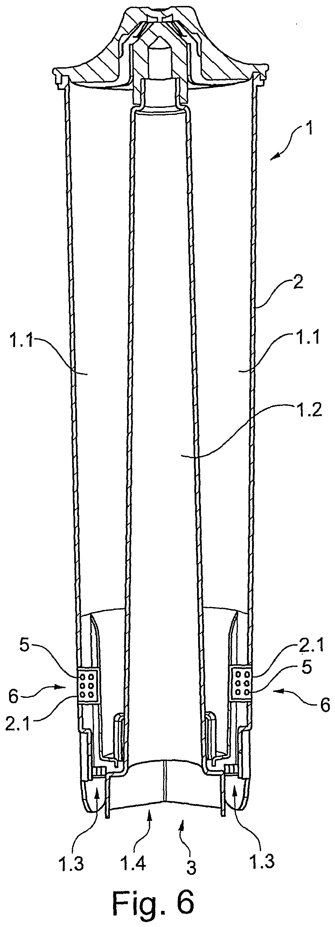

Die **Figur 6** zeigt eine Schnittdarstellung zu der in Fig. 5 dargestellten Ausführung einer Wasserfilterpatrone 1, mit an gegenüberliegenden Seiten des Gehäuses 2 angeordneten Depots 6 für das Mittel 5 gegen Kalkausfällungen. Kontaktöffnungen 7 einen Zugang für Wasser zum Mittel 5 sind aus Gründen der einfacheren Darstellung nicht gezeigt, können jedoch vorhanden sein. Die übrigen Bezugszeichen entsprechen den zu Figur 1 dargelegten Merkmalen der Wasserfilterpatrone 1.

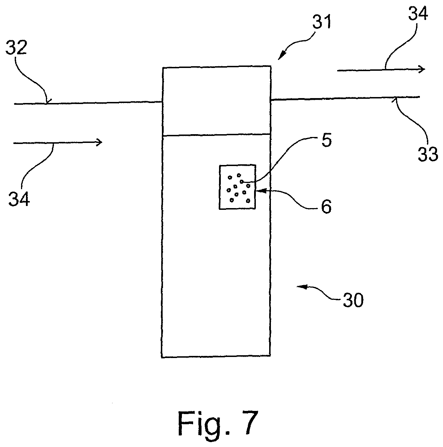

**Figur 7** zeigt einen weiteren Anwendungsfall, bei dem eine leitungsgebundene Wasserfilterkartusche 30 ein Mittel 5 gegen Kalkausfällungen umfasst, welches vorzugsweise in einem Depot 6 gelagert ist. Die leitungsgebundene Wasserfilterkartusche 30 ist an einem mit einer Zuleitung 32 und einer Ableitung 33 einer Wasserleitung verbundenen Anschlusskopf 31 angeschlossen. Pfeile 34 symbolisieren die Fließrichtung des Wassers.

### Bezugszeichenliste:

1 Wasserfilterpatrone
1.1 Aufstromkammer
1.2 Abstromkammer
1.3 Einlassöffnung
1.4 Auslassöffnung
2 Gehäuse
2.1 Deckel
3 filterseitiges Tankanschlusselement
4 Filterstrecke
5 Mittel gegen Kalkausfällungen
5.1 mit Mittel gegen Kalkausfällungen behandeltes Wasser
6 Depot
7 Kontaktöffnungen
8 Wasser
8.1 Pfeil
9 Vlies oder dgl.
10 Wassertank
10.1 Gehäuse
10.2 tankseitiges Filteranschlusselement
11 Haushaltsgerät, insbes. Heißgetränkemaschine
20 Aufbau
21 Polyphosphat
21.1 Behältnis
21.2 Pfeil
22 Behältnis
22.1 Auslass
23 Kationenaustauscher
24 Anionenaustuscher
25 Behältnis
25.1 Auslass
25.2 Verschlussmittel
26 Behältnis
27 entsalztes Wasser
30 leitungsgebundene Wasserfilterkartusche
31 leitungsgebundener Anschlusskopf für 30
32 Zuleitung
33 Ableitung
34 Pfeil

## Patentansprüche

1. Verfahren zur Herstellung eines festen Dosiermittels zur Dosierung von Polyphosphat und optional Phosphat in Wasser, wobei als Ausgangsstoff zur Beladung eines wasserunlöslichen Anionenaustauschers eine flüssige Polyphosphatlösung verwendet wird, insbesondere eine Natriumpolyphosphatlösung, **dadurch gekennzeichnet, dass** zur Beladung des Anionenaustauschers mit Polyphosphationen zunächst die Polyphosphatlösung insbesondere die Natriumpolyphosphatlösung, über einen sauren Kationenaustauscher, bevorzugt einen stark sauren Kationenaustauscher, filtriert und im Anschluss über den Anionenaustauscher in OH- bzw. freier Baseform geleitet wird.

2. Verfahren zur Herstellung eines festen Dosiermittels zur Dosierung von Polyphosphat und optional Phosphat in Wasser nach Anspruch 1, **dadurch gekennzeichnet, dass** als Anionenaustauscher ein schwach basischer Anionenaustauscher verwendet wird.

3. Verfahren zur Herstellung eines festen Dosiermittels zur Dosierung von Polyphosphat und optional Phosphat in Wasser nach Anspruch 1 oder 2, **dadurch gekennzeichnet, dass** als Anionenaustauscher ein schwach basischer Anionenaustauscher auf Polyacrylatbasis verwendet wird.

4. Verfahren zur Herstellung eines festen Dosiermittels zur Dosierung von Polyphosphat und optional Phosphat in Wasser nach Anspruch 1 oder 2, **dadurch gekennzeichnet, dass** als Anionenaustauscher ein schwach basischer Anionenaustauscher auf Polstyrolbasis verwendet wird.

5. Verfahren zur Herstellung eines festen Dosiermittels zur Dosierung von Polyphosphat und optional Phosphat in Wasser nach einem der vorangehenden Ansprüche, **dadurch gekennzeichnet, dass** eine Polyphosphatlösung mit einer Konzentration von 0,5 bis 5 Gew.% verwendet wird.

## Claims

1. Process for producing a solid dosing agent for dosing polyphosphate and optionally phosphate in water, wherein a liquid polyphosphate solution, in particular a sodium polyphosphate solution, is used as starting material for loading a water-insoluble anion exchanger, **characterized in that** the anion exchanger is loaded with polyphosphate ions by first filtering the polyphosphate solution, in particular the sodium polyphosphate solution, through an acidic cation exchanger, preferably a strongly acidic cation exchanger, and then passing it through the anion exchanger in OH⁻/free base form.

2. Process for producing a solid dosing agent for dosing polyphosphate and optionally phosphate in water according to Claim 1, **characterized in that** the anion exchanger used is a weakly basic anion exchanger.

3. Process for producing a solid dosing agent for dosing polyphosphate and optionally phosphate in water according to Claim 1 or 2, **characterized in that** the anion exchanger used is a weakly basic, polyacrylate-based anion exchanger.

4. Process for producing a solid dosing agent for dosing polyphosphate and optionally phosphate in water according to Claim 1 or 2, **characterized in that** the anion exchanger used is a weakly basic, polystyrene-based anion exchanger.

5. Process for producing a solid dosing agent for dosing polyphosphate and optionally phosphate in water according to any of the preceding claims, **characterized in that** a polyphosphate solution having a concentration of 0.5% to 5% by weight is used.

## Revendications

1. Procédé pour la fabrication d'un agent d'addition dosée solide destiné à l'addition dosée de polyphosphate et éventuellement phosphate à de l'eau, une solution liquide de polyphosphate, en particulier une solution de polyphosphate de sodium, étant utilisée comme produit de départ pour la charge d'un échangeur d'anions insoluble dans l'eau, **caractérisé en ce que** pour la charge de l'échangeur d'anions avec des ions polyphosphate, la solution de polyphosphate, en particulier la solution de polyphosphate de sodium, est d'abord filtrée sur un échangeur de cations acide, de préférence un échangeur de cations fortement acide, et ensuite envoyée sous forme OH- ou de base libre sur l'échangeur d'anions.

2. Procédé pour la fabrication d'un agent d'addition dosée solide destiné à l'addition dosée de polyphosphate et éventuellement phosphate à de l'eau selon la revendication 1, **caractérisé en ce qu'**est utilisé en tant qu'échangeur d'anions un échangeur d'anions faiblement basique.

3. Procédé pour la fabrication d'un agent d'addition dosée solide destiné à l'addition dosée de polyphosphate et éventuellement phosphate à de l'eau selon la revendication 1 ou 2, **caractérisé en ce qu'**est utilisé en tant qu'échangeur d'anions un échangeur d'anions faiblement basique à base de polyacrylate.

4. Procédé pour la fabrication d'un agent d'addition dosée solide destiné à l'addition dosée de polyphosphate et éventuellement phosphate à de l'eau selon la revendication 1 ou 2, **caractérisé en ce qu'**est utilisé en tant qu'échangeur d'anions un échangeur d'anions faiblement basique à base de polystyrène.

5. Procédé pour la fabrication d'un agent d'addition dosée solide destiné à l'addition dosée de polyphosphate et éventuellement phosphate à de l'eau selon l'une quelconque des revendications précédentes, **caractérisé en ce qu'**est utilisée une solution de polyphosphate à une concentration de 0,5 à 5 % en poids.
